# EUROPEAN PATENT APPLICATION

(11) **EP 1 719 712 A1**
(43) Date of publication of application: **08.11.2006**
(21) Application number: 05106374.1
(22) Date of filing: 12.07.2005
(51) Int. Cl.: B65D 33/16, B65D 63/10, C09J 7/02

(54) **Reclosable packages**

(30) Priority: 04.05.2005 US 120953
(71) Applicant: Sealstrip Corporation, Boyertown, PA 19512 (US)
(72) Inventor: Forman, Josephine A, 19512, Boyertown (US)
(74) Representative: Warren, Anthony Robert

(57) **Abstract**

A package (23) is formed from a web of packaging material and has a closed body with top and bottom end seals (24, 25) defining the package height therebetween. In one embodiment, a composite package reclosing strip (14) comprises a film strip (28) extending longitudinally the height of the package, and a tape (27), having an adhesive coating (29) on one face, longitudinally coextensive with and laterally partially overlying and adhered to the film strip (28). The adhesive coated longitudinally extending portion of the tape not adhered to the film strip is adhered to the package body and detachably secures the strip (28) thereto. When it is desired to reclose the package after opening the top seal (24), the top of the reclosing strip (14) is grasped and partially peeled down, the package top is rolled down, and the detached section of the reclosing strip is laid over and detachably sealed to the rolled down package top.

## Description

This invention relates to reclosable packages, and more particularly to flexible bag or pouch type packages typically, although not necessarily, for packaging food products, such as chips, nuts, raisins, crackers, and the like, in which the package contents are not consumed with one opening of the package and it is desired to reclose the package to store the remainder for subsequent use.

### BACKGROUND OF THE INVENTION

Reclosable packages are becoming a progressively larger part of the packaged food market because of increasing consumer preference. It is likely that eventually all packaged consumables will be marketed in reclosable packages. In the past, there have been attempts to devise such reclosable packages, but such previous attempts exhibit major shortcomings. One such previous approach is disclosed in European Patent EP 1254846 assigned to Amcor Flexibles. This patent discloses a structure in which a tearstrip is formed from a marginal edge of the packaging film along the package longitudinal seal, the tearstrip functioning to hold the package reclosed as shown in the patent drawings. No more than 20% of packaging films are suitable for utilizing the disclosed structure. Moreover, this structure will not work on a two roll system that fabricates a four-side-seal package as there is no longitudinal fin or lap seal packaging material from which to form the tearstrip which, as shown in the patent, must be coextensive with and attached to the longitudinal package seal. The reclosable package embodying the invention is not so limited.

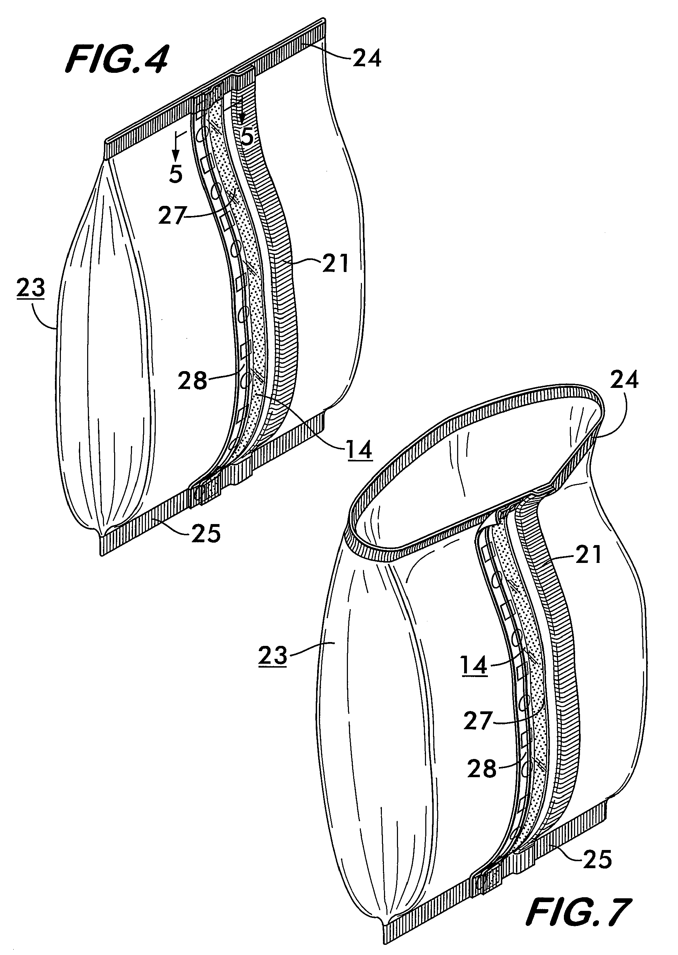

Additionally, the Amcor structure uses double faced adhesive tape or hot melt adhesive in combination with the strip of packaging film to secure the tearstrip to the package. The double faced tape utilizes a silicone coated release liner which must be disposed of during production. This is both expensive and inconvenient. Additionally, because most of the package films, particularly those such as double polypropylene laminate used for packaging food products, have low tear resistance, the reclosure strip can tear instead of detaching from the package. This requires that the double faced tape used must have different adhesives on the two faces, a strong adhesive bonding to the reclosure strip and a weak adhesive bonding to the package film. This is expensive tape. Moreover, as shown in Figure 4 of the Amcor drawings, the double faced tape is widthwise coextensive with the packaging film tearstrip and results in a package reclosing strip that is very difficult to separate from the package for use because there is no dry edge that can be grasped. Hot melt adhesive applied on-line is messy, has slow start-up, and is problematic and expensive. The novel reclosure strip and package embodying the invention suffer from none of the foregoing defects.

The difficulties with the foregoing described structure were apparently recognized, and a modified structure devised which is disclosed in Amcor published PCT patent application WO 2004/035389. While this modified structure utilizes a double faced adhesive tape that is narrower than the tearstrip to provide a dry edge for grasping, as in the Amcor European Patent EP 1254846, it still utilizes a reclosure strip that is obtained by cutting the strip off of the marginal edge of the packaging material and applying it to a double faced adhesive coated tape. This has several disadvantages. First, it retains the same disadvantages with regard to the double faced tape as the Amcor European Patent EP 1254846, as previously noted. Equally important, if the packaging manufacturer must provide the same SKU product in two package forms, one being a reclosable package and the other not, two separate packaging films must be inventoried because of the difference in packaging film width and graphics. This is a substantial expense to the manufacturer, but is a not uncommon requirement, because some customers want the reclosable feature and some do not want to pay for the extra packaging cost. Further, extensible films are widely used for packaging, and stretching during tearstrip formation will cause wrinkles and curves. Again, the novel reclosure strips and packages embodying the invention do not suffer from these defects.

Another known type of reclosable package utilizes a stick-on label as a package reclosing device. Such labels have a number of disadvantages that render them generally unsatisfactory. First, the labels are generally short relative to the package length, must be removed before use and reset on the package after the open package top has been rolled down, and when removed become contaminated with skin oils and product dust which destroys the adhesive qualities and allows the package to come open. Second, the labels are supplied on a release liner, which must be disposed of after the labels are detached for use. Additionally, label application is expensive, requiring two label applicators per packaging line to insure that every package has a label. Moreover, label application is not positionally precise, which may interfere with visually desirable graphics on the package. Over all, it is not a very desirable system.

### SUMMARY OF THE INVENTION

The reclosable package embodying the invention utilizes a novel reclosure strip which, unlike the Amcor structures, is made of materials independent of and different from the package material, and unlike the adhesive labels is of full package length. The reclosure strip according to one embodiment of the invention is a composite of a flexible single faced pressure sensitive adhesive tape adhered to a dry-edge-forming flexible film strip. The reclosure strip according to a second embodiment of the invention comprises a film substrate, which may have graphics printed thereon if so desired, and a pressure sensitive adhesive layer coated onto the full length and a widthwise portion of the film substrate strip. Both embodiments of the package reclosing strips according to the invention are substantially less expensive than the strips of packaging film and double faced adhesive coated tape used in the Amcor structures.

The snack food industry alone accounts for thousands of millions of packages per year of pretzels, potato chips, corn chips, tortilla chips, candy bites, and other products. A large packager produces on the order of 3000 million packages a year of these products, and the numerous smaller packagers produce on the order of 300 million packages a year. Cost analysis discloses that by using the reclosing strip according to the first embodiment of the invention as compared to the Amcor structures the cost savings to the smaller packager per year for 300 million packages is about 9 million dollars, and for the larger packager per year for 3000 million packages is 90 million dollars, and somewhat larger savings are effected by using the reclosing strip according to the second embodiment of the invention. These are not insignificant sums and will increase with an increasing market size.

The novel reclosure strip embodying the invention is not formed from the package material, so, as distinguished from Amcor, the packaging manufacturer need inventory only a single packaging film, and can make packages with or without the reclosure strip. Instructional or other graphics can be printed on the dry-edge-forming film strip. No expensive double faced tape or problematic hot melt adhesive system is required. No expensive production machinery, as required for Amcor and label application, is needed for production of packages according to the invention, but only standard packaging machinery and an inexpensive standard tape unwind and applicator device. The reclosure strip is precisely laterally positionable anywhere along the running length of the package and avoids adhesive contamination because in use it is not detached from the package.

Accordingly, it is a primary object of the invention to provide a novel reclosable package utilizing a novel package reclosure strip.

Another object of the invention is to provide a novel package reclosure strip which in one embodiment comprises the combination of a film strip furnishing a dry edge for grasping, and a single faced adhesive coated tape longitudinally co-extensive with and laterally partially overlying and adhered to the film strip effective for securing the film strip to the package.

An additional object of the invention is to provide a novel package reclosure strip which in a second embodiment comprises a film substrate and a pressure sensitive adhesive layer coated onto the full length and a widthwise portion of the film substrate strip.

A further object of the invention is to provide a novel package reclosure strip as aforesaid, with instructional or other graphics printed on the dry-edge-forming film strip.

A yet further object of the invention is to provide a novel package and package reclosure strip as aforesaid that is substantially less expensive than those previously used for the same purpose.

Still another object of the invention is to provide a novel package and package reclosure strip as aforesaid that requires no special manufacturing equipment, but utilizes standard packaging machinery and an inexpensive tape unwind and applicator device.

Various embodiments of the invention will now be described with reference to appended drawings, wherein:
Figure 1 is a cross section through a flexible package showing a prior art structure of package reclosing strip using layered pieces of packaging film and double faced tape;
Figure 2 is an enlarged showing of the prior art structure shown in Figure 1 as would be seen in the phantom circle on Figure 1;
Figure 3 is a diagrammatic showing of a vertical form fill and seal packaging machine together with the packaging film supply system and the reclosing tape applicator applying the reclosing tape to the packaging film;
Figure 4 is a perspective view of a flexible package such as could be made with the apparatus of Figure 3, with the package reclosing strip embodying the invention shown thereon;
Figure 5 is an enlarged cross sectional view through the package reclosing strip embodying the invention as would be seen when viewed along lines 5-5 on Figure 4;
Figure 6 is a showing similar to that of Figure 5 except that the dry edge film strip part of the reclosing strip is shown lifted outward so that the reclosing strip can be pulled downward as shown in Figure 7;
Figure 7 is a showing of the package of Figure 4 which has been opened to remove some of the packaged product;
Figure 8 is a showing of the package of Figures 4 and 7 which has been opened and had product removed, and with the open package top partly rolled down, but with the partly detached reclosing strip not yet applied to the rolled down package top to hold it closed;
Figure 9 is similar to Figure 8 but with the reclosing strip applied to the rolled down package top to hold it closed;
Figure 10 is a top plan view of a second, and preferred, form of the package reclosing strip embodying the invention; and
Figure 11 is a cross section through the reclosing strip of Figure 10 as would be seen when viewed along lines 11-11 on Figure 10.

In the several figures, like elements are designated by like reference characters.

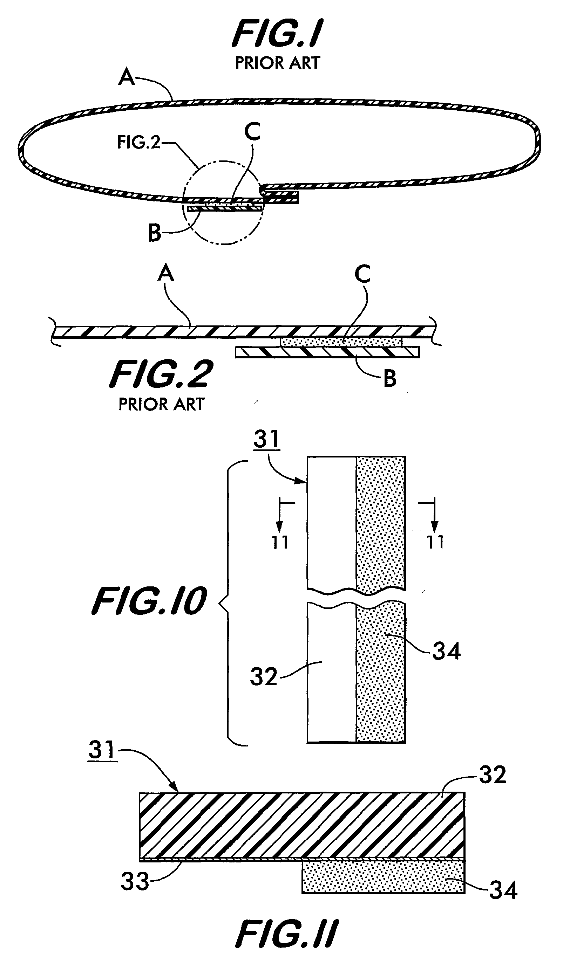

Considering first the prior art showings of drawings Figures 1 and 2, there is seen a cross section through a typical flexible package A showing a package reclosing strip consisting of a strip of packaging film B that has been cut off of the film web from which the package is formed, and a double faced adhesive coated tape C. This structure has all of the disadvantages previously described in connection with the prior art described in the BACKGROUND OF THE INVENTION, and the additional disadvantage, as shown, of the very narrow accessible dry edge of the packaging film strip B, which makes it difficult to grasp for peeling off of the package. None of these disadvantages are present in the package reclosing strips embodiments according to the invention.

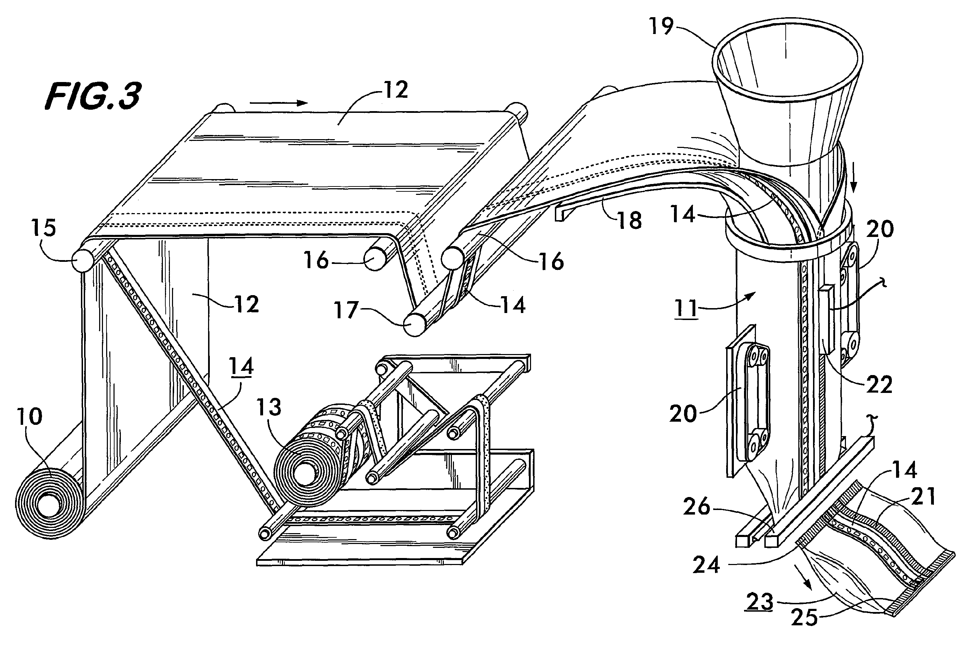

Turning now to the apparatus shown in Figure 3, there is seen a roll 10 of packaging film from which is pulled, by the packaging machine 11 film drives 20, the web of packaging film 12. Simultaneously pulled from the tape unwinder and applicator supply roll 13 by the packaging machine 11 is the novel package reclosing strip 14 embodying the invention, which is adhered to the film web 12 as the film web and reclosing strip pass around roller 15. The composite film web and reclosing strip enroute to the packaging machine 11 pass around fixed position rollers 16 and dancer roller 17, which latter, in the known manner, automatically reciprocates vertically to adjustably provide the proper rate of web feed to the packaging machine.

The composite web is pulled over the packaging machine forming collar 18, wrapped around the product delivery tube 19 in the normal manner by the web pulling belt drives 20, and provided with a longitudinal seal 21 by the sealer 22. The finished package 23 exits the packaging machine 11 with the product sealed inside by the top seal 24 and bottom seal 25 formed by the sealer 26, and with the reclosing strip 14 adhered to the package and extending the full length of the package from top to bottom. The package may be of the type as shown in Figure 3, or the gusseted type, or a pouch type, or four sided seal package. The packaging machine 11 could for example be a Hayssen Vertical Form Fill and Seal machine, and the tape supply roll 13 could be spooled off of a Sealstrip Model D560 Tape Dispenser.

Figure 4 shows a package 23 such as may be produced by the packaging machine 11 of Figure 3, having top and bottom seals 24 and 25, a longitudinal seal 21, and with the package reclosing strip 14 adhered to the package and extending from the package top seal to its bottom seal. As seen in Figures 4 through 8, the package reclosing strip 14 is a composite strip formed from a single faced adhesive coated tape 27 partially widthwise overlying and adhered to a separate film strip 28 by the adhesive coating 29 on the tape 27. The single faced adhesive coated tape 27 could be a substrate from one of the group of bi-axially oriented polypropylene, mono-axially oriented polypropylene, polyvinylchloride, and polyester, within the thickness range between 0.8 mil and 4.0 mils, coated with a pressure sensitive adhesive of the group of rubber solvent, acrylic solvent, acrylic emulsion, and hot melt in the thickness range of 0.5 mil to 2.0 mils in coat weight. The film strip 28 could be single or multiple layer bi-axially oriented polypropylene or high density polyethylene within the thickness range of 1.0 mil to 2.5 mils, typically 1.7 mils, or polyester in the thickness range of 1 to 2 mils.

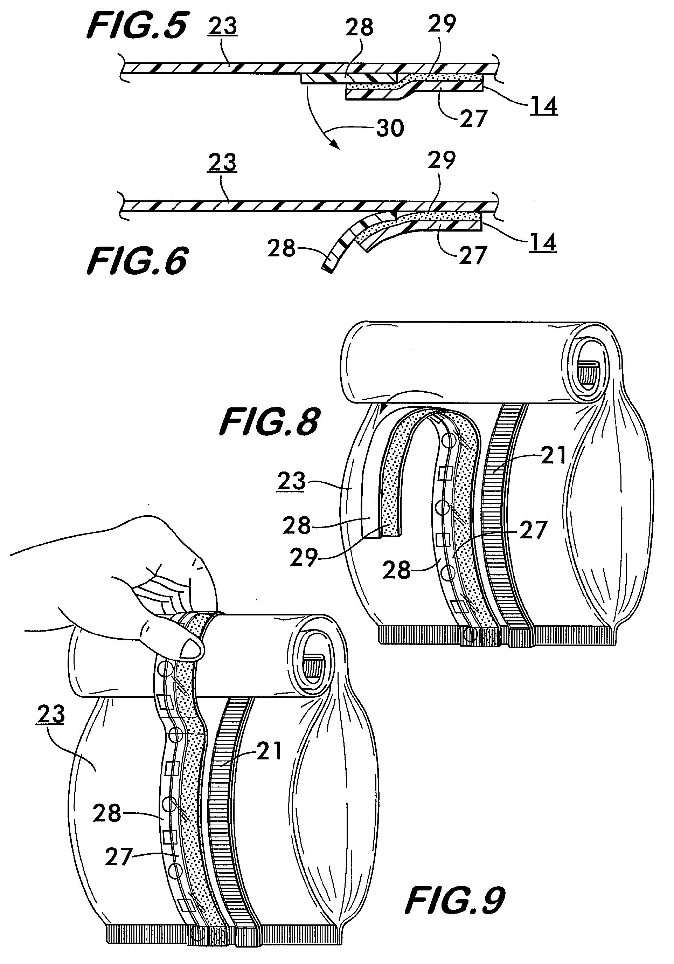

As best seen in the enlarged fragmentary detail views of Figures 5 and 6, the film strip 28 is not itself adhered to the package, but is secured thereon by the single faced tape 27 whose adhesive layer 29 is adhered to the package. The reclosing strip is activated by grasping the film strip 28 and lifting or pivoting it outward as indicated by the arrow 30 in Figure 5 to an opened position as shown in Figure 6. This permits grasping the reclosing strip 14 and pulling it downward to partially detach it from the package 23, as shown in Figure 8, after the package has been opened and some contents removed, but prior to rolling down the package top, as shown in Figure 7. The package top is then rolled down as shown in Figure 8, and the detached section of the reclosing strip 14 is laid over and detachably sealed to the rolled down package top as shown in Figure 9.

The next time that it is desired to remove some of the contents from the package, the reclosing strip is peeled down so that the package top may be unrolled for dispensing product, and the same reclosing process is then again performed. In this embodiment of the invention the film strip 28 could typically be about one half inch wide, with the single faced adhesive coated tape 27 being about three quarters of an inch wide with about one quarter inch widthwise overlap of the tape onto the film strip to provide a composite reclosing strip 14 of about one inch in width.

Considering now Figures 10 and 11, there is seen a second, and preferred, form of novel package reclosing strip 31 consisting of a film substrate 32, which may have graphics 33 printed thereon as shown, if so desired, and a pressure sensitive adhesive layer 34. The substrate 32 could be bi-axially oriented polypropylene in the thickness range of 1 to 2.5 mils, and the adhesive could typically be a pressure sensitive rubber solvent type in the thickness range of ½ to 2 mils. Also usable as the substrate are the other films previously noted for use as the film strip 28, and similarly for the adhesive coating 29 on the tape 27. The reclosing strip 31 is less expensive to make than the reclosing strip 14, and can be made from a web of substrate 40 inches to 60 inches wide with the graphics printed by a high speed printing press, followed by strip zone coating with the pressure sensitive adhesive. The web is then slit into a plurality of finished reclosing strips 31, and level wound onto spools or rolls 13 for storage and subsequent dispensing.

In the various embodiments, the reclosing strips can be made of less expensive materials than the package material, and those of prior art structures. Graphics can be printed on the film strips, which are laterally positionable on the packages, and adhesive contamination is avoided because the film strips are not detached from the packages.

Having now described my invention in connection with particularly illustrated embodiments thereof, it will be understood that modifications and variations thereof may now occur from time to time to those normally skilled in the art without departing from the essential scope of the invention as defined in the appended claims.

## Claims

1. A composite package reclosing strip comprising in combination,
a) a flexible film strip having running length and width, and
b) a single faced adhesive coated flexible tape longitudinally co-extensive with and laterally partially overlying and adhered to said film strip by the adhesive coating, the adhesive coated longitudinally extending portion of said tape not adhered to said film strip being usable for securing said film strip to another surface.

2. A composite strip as set forth in claim 1, wherein said flexible film strip is of substantially fixed width.

3. A composite strip as set forth in claim 1 or 2, wherein said adhesive coated flexible tape is of substantially fixed width.

4. A composite strip as set forth in claim 1, 2 or 3, wherein said flexible film strip is of substantially fixed width narrower than the width of said adhesive coated flexible tape.

5. A composite strip as set forth in any preceding claim, wherein said flexible film strip is one of the group of single or multiple layer bi-axially oriented polypropylene, high density polyethylene, and polyester.

6. A composite strip as set forth in any preceding claim, wherein said flexible film strip is within the thickness range of between 1.0 mil to 2.5 mils.

7. A composite strip as set forth in any preceding claim, wherein said flexible film strip is bi-axially oriented polypropylene within the thickness range of 1.0 mil to 2.5 mils.

8. A composite strip as set forth in any preceding claim, wherein said adhesive coated flexible tape comprises a substrate coated with an adhesive, and said substrate is one of the group of bi-axially oriented polypropylene, mono-axially oriented polypropylene, polyvinylchloride, and polyester.

9. A composite strip as set forth in any preceding claim, wherein said adhesive coated flexible tape comprises a substrate coated with an adhesive, and said substrate is within the thickness range between 0.8 mil and 4.0 mils.

10. A composite strip as set forth in any preceding claim, wherein said adhesive coated flexible tape comprises a substrate coated with an adhesive, and said substrate is one of the group of bi-axially oriented polypropylene, mono-axially oriented polypropylene, polyvinylchloride, and polyester, within the thickness range between 0.8 mil and 4.0 mils.

11. A composite strip as set forth in any preceding claim, wherein said adhesive coated flexible tape comprises a substrate coated with an adhesive, and said adhesive is a pressure sensitive adhesive of the group of rubber solvent, acrylic solvent, acrylic emulsion, and hot melt.

12. A composite strip as set forth in any preceding claim, wherein said adhesive coated flexible tape comprises a substrate coated with an adhesive, and said adhesive is a pressure sensitive adhesive in the thickness range of 0.5 mil to 2.0 mils in coat weight.

13. A composite strip as set forth in any preceding claim, wherein said adhesive coated flexible tape comprises a substrate coated with an adhesive, and said adhesive is a pressure sensitive adhesive of the group of rubber solvent, acrylic solvent, acrylic emulsion, and hot melt, and in the thickness range of 0.5 mil to 2.0 mils in coat weight.

14. A composite strip as set forth in any of claims 1 to 4, wherein,
a) said flexible film strip comprises 1.7 mils thick bi-axially oriented polypropylene, and
b) said single faced adhesive coated flexible tape comprises a substrate coated with a pressure sensitive adhesive, wherein,
(1) said substrate is 2.0 mils thick bi-axially oriented polypropylene, and
(2) said pressure sensitive adhesive is a rubber solvent adhesive.

15. A package reclosing strip comprising in combination,
a) a flexible film substrate strip having running length and width, and
b) a pressure sensitive adhesive layer coated onto the full length and a widthwise extending portion of said film substrate strip, said widthwise portion being sufficiently less than the full strip width to provide a graspable strip dry edge.

16. A package reclosing strip as set forth in claim 15, further including graphics printed on said film substrate strip.

17. A package reclosing strip as set forth in claim 15 or 16, wherein said substrate is one of the group of single or multiple layer bi-axially oriented polypropylene, high density polypropylene, and polyester,

18. A package reclosing strip as set forth in claim 15, 16 or 17, wherein said flexible film substrate strip is within the thickness range of between 1.0 mil to 2.5 mils.

19. A package reclosing strip as set forth in any of claims 15 to 18, wherein said pressure sensitive adhesive layer coated onto said film substrate strip is in the thickness range of 0.5 mil to 2.0 mils in coat weight.

20. A package reclosing strip as set forth in any of claims 15 to 19, wherein said substrate is one of the group of bi-axially oriented polypropylene in the thickness range of 1 to 2.5 mils, high density polypropylene in the thickness range of 1.5 to 2.5 mils, and polyester within the thickness range of 1.25 to 2 mils, and said pressure sensitive adhesive layer coated onto said film substrate strip is in the thickness range of 0.5 mil to 2.0 mils in coat weight.

21. The combination of a package and a composite package reclosing strip detachably secured to said package for closing the package after it has been opened and some of the contents removed, comprising,
a) a package formed from a web of flexible packaging material, comprising a closed package body having height and width, and having opposite ends with end seals defining the package height therebetween, and
b) a composite package reclosing strip comprising in combination,
(1) a flexible film strip extending fully longitudinally the height of said package between said package opposite ends, and
(2) a single faced adhesive coated flexible tape longitudinally co-extensive with and laterally partially overlying and adhered to said film strip by the adhesive coating, the adhesive coated longitudinally extending portion of said tape not adhered to said film strip being detachably adhered to said package body.

22. The combination of a package and a composite package reclosing strip as set forth in claim 21, wherein said package reclosing strip is locatable widthwise on said package at a desired position.

23. The combination of a package and a composite package reclosing strip as set forth in claim 21 or 22, wherein said package reclosing strip is located widthwise on said package at a desired position, and oriented substantially orthogonally to said package ends.

24. The combination of a package and a composite package reclosing strip as set forth in claim 21, 22 or 23, wherein,
a) said flexible film strip comprises 1.7 mils thick bi-axially oriented polypropylene, and
b) said single faced adhesive coated flexible tape comprises a substrate coated with a pressure sensitive adhesive, wherein,
(1) said substrate is 2.0 mils thick bi-axially oriented polypropylene, and
(2) said pressure sensitive adhesive is a rubber solvent adhesive.

25. The combination of a package and a composite package reclosing strip as set forth in any of claims 21 to 24, wherein said flexible film strip is of substantially fixed width narrower than the width of said adhesive coated flexible tape.

26. The combination of a package and a composite package reclosing strip as set forth in claim 21, 22 or 23, wherein,
a) said flexible film strip comprises bi-axially oriented polypropylene in the thickness range between 1.0 mil and 2.5 mils, and
b)) said single faced adhesive coated flexible tape comprises a substrate coated with a pressure sensitive adhesive, wherein,
(1) said substrate is one of the group of bi-axially oriented polypropylene, mono-axially oriented polypropylene, polyvinylchloride, and polyester, in the thickness range between 0.8 and 4 mils, and
(2) said pressure sensitive adhesive is one of the group of a rubber solvent adhesive, acrylic solvent, acrylic emulsion, and hot melt, having a coat weight between 0.5 mil and 2.0 mils.

27. The combination of a package and a package reclosing strip detachably secured to said package for closing the package after it has been opened and some of the contents removed, comprising,
a) a package formed from a web of flexible packaging material, comprising a closed package body having height and width, and having opposite ends with end seals defining the package height therebetween, and
b) a package reclosing strip comprising in combination,
(1) a flexible film substrate strip having running length and width extending fully longitudinally the height of said package between said package opposite ends, and
(2) a pressure sensitive adhesive layer coated onto the full length and a widthwise extending portion of said film substrate strip, said widthwise portion being sufficiently less than the full strip width to provide a graspable strip dry edge.

28. The combination of a package and a package reclosing strip as set forth in claim 27, wherein said package reclosing strip is locatable widthwise on said package at a desired position.

29. The combination of a package and a package reclosing strip as set forth in claim 27 or 28, wherein said package reclosing strip is located widthwise on said package at a desired position, and oriented substantially orthogonally to said package ends.

30. The combination of a package and a package reclosing strip as set forth in claim 27, 28 or 29, wherein said flexible film substrate strip is one of the group of bi-axially oriented polypropylene in the thickness range between 1 to 2.5 mils, high density polypropylene in the thickness range of 1.5 to 2.5 mils, and polyester, in the thickness range between 1.25 and 2 mils.

31. The combination of a package and a package reclosing strip as set forth in any of claims 27 to 30, wherein said pressure sensitive adhesive is one of the group of a rubber solvent adhesive, acrylic solvent, acrylic emulsion, and hot melt, having a coat weight between 0.5 mil and 2.0 mils

32. The combination of a package and a package reclosing strip as set forth in any of claims 27 to 30, wherein said flexible film substrate strip is one of the group of bi-axially oriented polypropylene in the thickness range between 1 to 2.5 mils, high density polypropylene in the thickness range of 1.5 to 2.5 mils, and polyester, in the thickness range between 1.25 and 2 mils, and wherein said pressure sensitive adhesive is one of the group of a rubber solvent adhesive, acrylic solvent, acrylic emulsion, and hot melt, having a coat weight between 0.5 mil and 2.0 mils.
